# EUROPEAN PATENT APPLICATION

(11) **EP 0 968 772 A2**
(43) Date of publication of application: **05.01.2000**
(21) Application number: 98121121.2
(22) Date of filing: 10.11.1998
(51) Int. Cl.: B07C 5/342

(54) **A sorting machine**

(30) Priority: 02.07.1998 US 109463
(71) Applicant: SATAKE USA INC., Houston, Texas 77036 (US)
(72) Inventor: Gray, Calvin G., Houston, Texas 77027 (US); Pawley, Jeffrey S., Sugarland, Texas 77479 (US); Narurkar, Sudhakar V., Houston, Texas 77074 (US)
(74) Representative: Frankland, Nigel Howard

(57) **Abstract**

A background medium for an optical sorting machine that sorts products in a passing product strewn by detecting variations in colour or hue against the background, is a clear cylindrical or flat material(51) located in the centre of the optical viewing assembly of the machine and having a background area(53) painted or projected thereon. The background is preferably on the outside surface of the tubular material aligned opposite the product stream from the detector(44,46) of the light that is reflected from a fight source off the products in the stream. Alternatively, the background area is textured, such as being frosted to cause a diffusion effect, and a background colour is projected as a background image onto the textured area. A machine that uses a bichromatic sorting background is similarly improved for a background colour or hue established in two sorting frequency spectrums. Multiple backgrounds can also be employed on a single tubular material for the respective optical sorting detectors that are employed to view the product stream at various different angles.

## Description

**THIS INVENTION** pertains to sorting machines that optically sort or separate substandard fungible items from standard items as the items flow past an optical viewing station of such a machine and in front of a standardised background and, specifically, to an improved background structure for such a machine.

A typical sorting machine of the type to which the present invention relates is a high speed sorting machine typically used for sorting fungible products in the food industry or otherwise. In a typical example of such a machine, individual forgible products, such as coffee beans are caused to flow by gravity feed down a steep channel or chute to be sorted to separate "substandard" beans from standard ones. The term "substandard" applies to beans that do not meet a predetermined criteria in that they are outside of a predetermined acceptable range of "colour" or hue in one or more spectral bands of radiation, which bands are in some cases outside of the visible colour spectrum.

In the simplest case, the items are sorted for variation from a predetermined hue or shade of colour, including a shade of black or white and thus a shade of grey, in a single band within the spectrum. Such a sorting procedure is referred to as monochromatic sorting since only a single band within the radiation spectrum is being observed. In a more complex optical colour sorting operation, the flow of items is sorted to determine when an item is reflecting an unacceptable radiation amount in two or more spectral bands. A sorting procedure that uses two spectral bands is referred to as bichromatic sorting and a sorting procedure that uses more than two spectral bands is referred to as multichromatic sorting.

Optical sorting machines of the type generally described above employ optical sensors that include one or more photodetectors, such as photodiodes, The photodetectors are positioned to observe the illuminated product stream through a window that is transparent to light within the relevant band or bands in the spectrum. The strewn passes between an optical sensor and a background which may have a colour or shade that matches the preferred standard colour of the products in the product stream in standard colour or shade so that only a variation in a product colour or shade causes a detection event or, alternatively, has a colour which contrasts with the standard product colour or shade by a predetermined amount. For example, a black background is often employed when sorting brown coffee beans.

The illumination is from one or more lamps directed at the product stream to cause standard reflectivity from standard products in the one or more radiation bands being observed and to cause substandard reflectivity from substandard products in those bands. In some cases, there are additional general illumination lights to brighten the whole area.

The machines also include an ejector mechanism located downstream from the sensor or sensors and actuated by an electrical signal originating from sensor detection. When a substandard item or product is detected, that is to say a product that does not meet a predetermined criterium, an electrical signal is produced and the ejector is actuated just as the substandard product is aligned with the ejector mechanism. Therefore, there is a very slight delay from the time of sensing to the time of ejecting. The typical ejector mechanism is usually an air ejector.

As mentioned, the product stream flows in front of a background the colour or shade of the background is critical to the overall operation. The desired colour or shade for the background may be obtained by carefully painting the background, letting the background dry and then operating the machine to determine the reflectivity characteristics of the background in the critical wavelength band or wavelength bands used in the sorting process. When black is employed, the characteristics of the "black" are determined since a painted surface will always have some variation from true black. The acceptable and unacceptable products are then compared to the standard background that has been created and evaluated.

Much time is consumed in creating such a standard background. However, even after the background is prepared in the above manner and evaluated, it is well-known that the background does not stay in the original condition for long after it is put in use. This is because of many factors, but primarily to the accumulation of dust or chaff that collects on the background during the sorting operation from the environment of sorting. In addition to natural room dust that collects on the background, the background may collect dust or chaff produced by the products themselves as they slide, roll around, or are dropped and bounce along the sorting stream and through the optical viewing station where the background is located. After a build up of such dust or chaff, the "black" colour that the background started with has been changed, which has a resulting change on the sorting operation. As a result, some products may be wrongly classified in the sorting process so that some non-acceptable products are classified as acceptable and some acceptable products are classified as non-acceptable. When too many misclassifications have occurred, the machine must be shut down for cleaning and/or the replacement of the background. Even cleaning the background can result in its fading or change of colour and the suspension of machine operation is costly and undesirable.

Backgrounds of a contrasting colour may be other than black and may be of a colour or hue that matches the standard colour of the products being sorted, rather than a contrasting colour or hue, depending on how the sorting machine operates. In all events, painted colour backgrounds as known in the prior art fairly quickly become contaminated by dust or chaff in operation and thus have the disadvantages as discussed above.

U.S. patent 5,265,732, discloses a background for a sorting machine in the form of a background frosted glass diffuser separated from the clear glass or other material forming a central cylinder through which the product stream flows. The frosted diffuser in the receives the projection of one or more background lights to avoid having to replace or frequently clean a painted surface which is exposed to the accumulation of dust or chaff However, the frosted glass of the is typically positioned so that there are two thicknesses of curved opening glass or other clear materials, one thickness for each side of the cylinder, that are separated from the background diffuser. These thicknesses of glass may cause distorted reflections and glare.

Many sorting machines do not employ a cylindrical viewing tube, but employ flat window glass instead. In such case, the background is still separated from the glass. Whether curved or flat glass is involved, the separation of the background from the glass can cause glare from the lights used for general illumination or from the fights used in the detection process and even from natural light in the vicinity. Glare is a particularly insidious problem with the prior art diffusers because glare alone changes the reflectivity characteristics of the material in such a way that could impact sorting accuracy and efficiency.

From the above description it will be understood that a preferred embodiment of the invention provides an improved background for sorting machines in which two glass parts used in the prior art are replaced by a single back surface of the central cylinder or flat viewing glass combined with a painted or diffuser background area that simplifies the overall structure while reducing distorted reflections and glare.

Also, a preferred embodiment of the present invention has a small clearmaterial cylinder in an optical sorting machine, the cylinder being painted or frosted to receive an image projection in place of a conventional background, the glare and distortion effect of the cylinder being much less than with prior art arrangement.

According to this invention there is provided colour sorting machine for sorting homogeneous products in a passing product stream by colour contrast with a background in one or more spectral bands including at least one optical viewing assembly having a light source producing light in at least one spectral band to illuminate the products in the product stream, and a detector for detecting the reflected light in said spectral band or bands resulting from product reflections of the light from the light source and producing an ejector signal for each product reflection outside a predetermined criterium, and an ejector position downstream from said optical viewing assembly for removing products that cause an ejector signal, the machine incorporating a background on the other side of the passing stream from the detector to provide an acceptable base reflection amplitude for contrasting the said reflected light in said spectral band, the background including a clear window material aligned with said detector on the other side of the product stream from the detector, and a background area placed on said material.

Preferably the material at least partially surrounds the product stream. The background area on said material may be paint, and thus the background area may be paint on the outside surface of the material. The paint may be substantially black or substantially white, or may be substantially the same colour as acceptably coloured products in the passing product stream.

Alternatively the background area on the material may be projected image, and the material may be textured, for example by being frosted, prior to receiving the projected image. The material may be plastic.

In a preferred embodiment the material is in the shape of a tube through which the passing product stream flows.

In a preferred machine there are three optical viewing assemblies.

According to another aspect of this invention there is provided a method of producing a background for a colour sorting machine that sorts homogeneous products in a passing product stream by colour contrast with a background in one or more spectral bands, the sorting machine including at least one optical viewing assembly having a light source for producing light in at least one spectral band to illuminate the products in a product stream, and a detector to detecting the reflected light in said spectral band or bands resulting from product reflections of the light from the light source and producing an ejector signal for each product reflection outside a predetermined criteria, and an ejector position downstream from said optical viewing assembly for removing products that cause an ejector signal, said method comprising at least partially surrounding the passing product stream with a clear material aligned with said detector, and creating a background area on said material on the other side of the passing product stream from the detector.

In the method of the invention the background area may be created by painting or, alternatively, may be created by texturing the material by frosting and projecting an image on to the area.

The background of a machine which is a preferred embodiment of the present invention operates in conjunction with an electro-optical viewing station of the machine for sorting small fungible items in a flow of such products. A monochromatic sorting machine of this type has at least one product channel for the product stream that includes a viewing station at some location therealong. There is a clear glass flat transparent window or cylinder by or through which products flow at the viewing station, and one or more lamps at the viewing station for reflecting light from the product stream. At least one optical sensor is located at the viewing station for sensing a predetermined wavelength band of reflected light selected from the available spectral ranges or bands. A background area for each sensor at the viewing station contrasts with or is the same colour as the acceptable products in the product stream. A comparator is connected to each sensor and to a minimum standard (which can be provided by hardware or software means) for determining if the quantity of light reflected in a preselected spectral band or range is below or above a predetermined level. The sensor thus sets a predetermined criterium which must be met by each product for the product to be acceptable. An ejector or product separator is provided for separating products from the stream detected by the sensor or sensors as being below or above the predetermined level in fight reflectivity in the operating spectral band. Bichromatic sorting machines include appropriate sensors for two operating spectral bands. Multichromatic sorting machines employ sensors for more than two spectral bands.

The preferred embodiment of the invention incorporates a transparent cylindrical or flat glass window and background combination. Preferably clear glass cylinder is located in the centre of the viewing station and has an inside diameter just large enough so that the passing stream of products does not touch the cylinder. A background area is painted on either the inside or the outside of the cylinder on the opposite side of the centre of the cylinder from the optical sensor. This area is often black, but the colour of the area can be compatibly contrasting or matching in colour or hue with the preferred colour of the product being sorted depending on the operation of the machine. For a three vision machine, there are three appropriate areas of the cylinder, one corresponding and opposite each of the three optical sensors. As mentioned, flat glass viewing windows can be similarly painted.

Alternatively, the cylinder or flat glass can be frosted or otherwise textured in each of the background areas. A projector of an appropriate colour is then positioned outside of the cylinder or flat glass and behind each of the roughened areas to create an appropriate visual background area for each of the sensors.

The cylinder or flat viewing window can be made of clear transparent plastic rather than made of glass material. Moreover, the material may be in a shape that is neither cylindrical nor flat and still accomplish substantially the same result.

So that the manner in which the above-recited features, advantages and objects of the invention, as well as others which will become apparent, are attained and can be understood in detail, more particular description of the invention briefly summarised above may be had by reference to the exemplary preferred embodiments thereof which are illustrated in the drawings, which form a part of this specification, and in which:
Fig. 1 is a side view, partly in cutaway, of an electro-optical sorting machine in accordance with the present invention,
Fig. 2 is a schematic perspective view of a simplified optical viewing station in accordance with the prior art,
Fig. 3 is a schematic perspective view of a simplified optical viewing station in accordance with a preferred embodiment of the present invention,
Fig. 4 is a schematic perspective view of a simplified optical viewing station in accordance with another preferred embodiment of the present invention,
Fig. 5 is the top view of a background cylinder used in an optical viewing station of a three vision optical sorting machine in accordance with the present invention.

It is to be noted, however, that the appended drawings illustrate only typical preferred embodiments of the invention and are not to be considered limiting of its scope as the invention may admit to other equally effective embodiments.

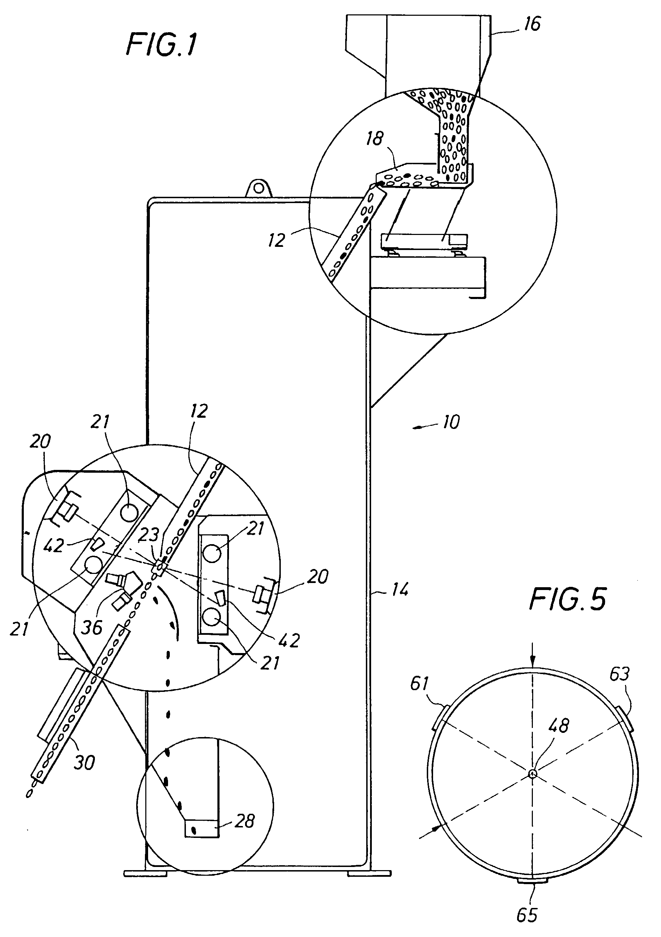

Now referring to the drawings, and first to Fig. 1, a high speed sorter for separating non-standard fungible products or items from a passing stream or flow of such products is shown. Generally, a sorting machine 10 includes one or more channels or chutes or slides 12 inclined at a steep angle, usually over 45' and preferably on the order of 60'. The channels are held in position by a framework 14 and are gravity fed the product stream to be sorted at the top by a hopper 16 attached to the same framework. The product stream feeds from hopper 16 through dividing vibratory feeder 18 to channels 12. Although a commercial machine usually has two or more channels 12 operating simultaneously with respect to the products that flow respectively through them, for simplicity of discussion, machine 10 is discussed hereinafter as including only a single channel 12.

The products to be separated or sorted by machine 10 are small fungible items, such as coffee beans. Coffee beans, it will be appreciated, are individually identifiable by colour in one or more spectral bands. The feed from the hopper via the vibratory feeder and down the channel is all by gravity action. The flow of the products is only slowed from free fall by the friction caused by the bends and the surfaces of the path. The products do move, however, at a fast rate and in large quantity, as is well known in the art.

An optical viewer or sensor 20, described more fully below, is located toward the bottom part of the channel. A background area 23 on a flat glass window of the viewing station, as described more completely below, is provided for each sensor 20. Reflections from the products in the strewn resulting from fight from lamps 42 are received at sensors 20. Lamps 21 provide general illumination. A two-view sorter is shown in Fig. 1, there being one optical sensor viewing the products at a first angle and a second sensor 20 viewing the products at a second angle when the process is viewed axially. Additional sensors can be deployed, if desired. As the flow of products passes the sensors, non-standard or substandard products are sensed or detected. It will be appreciated that such sensing or detection requires the substandard products to be distinguished both from the standard products and the background. Typically, a substandard item, such as a coffee bean, is detectable on the basis of its being darker or lighter or of a different colour or hue from an acceptable range of darkness, lightness or colour which has been predetermined for standard or acceptable items. This sensing can be in a single spectral band or range for monochromatic detection, in two separated spectral bands or ranges for bichromatic detection, or in a plurality of spectral ranges for multichromatic detection. It is understood that a "spectral band or range" can be wholly or partially in the visual spectrum or can be wholly or partially in the non-visual spectrum. For example, sensing in the infrared part of the spectrum is commonly done. When a substandard product or item is sensed, an electrical signal is produced that results in an ejection of the substandard item by the actuation of an ejector mechanism.

Frequently, detection of the products is made on the basis of being distinguishable from a standard black or other colour by the production of an acceptable range signal for acceptably coloured products or the production of a non-acceptable range or actuation signal for non-acceptably coloured products.

An ejector 36 located underneath and adjacent the viewing station is actuated by the actuation electrical signal just mentioned to produce an air blast to remove the unwanted substandard product from the flow of products in the product stream. The removed products are deposited in a reject accumulator 28. The ejector can be a mechanical ejector, if desired. When the actuation signal occurs, typically, a solenoid valve is operated to release or emit an air blast at the product stream at an appropriate time to remove the substandard item. The delay in actuation is very short following the time of sensing, the timing being such as to produce the desired expelling of the detected substandard item. This is accomplished in a manner well known in the art. The items thus removed in the process fall down into reject accumulator 28 for subsequent disposal. The items not removed continue down channel extension 30 to be gathered or packaged as quality products passing the pre-set standards and avoiding removal. The control of the flow and the sensitivity of the sensors are controlled by pre-set controls that are well-known in the art.

The optical viewing station including the sensors 20 generally is structured with a centre opening, the flow of the products to be separated or sorted as discussed above passing by a sensor at a "window" location or plane. The optical or viewing mechanism is well-known and generally includes two or three peripherally spaced individual sensors, which could include a photocell or photodiode.

Each sensor operates in conjunction with a background area 23 thereopposite, which can be painted on the transparent glass enclosing the housing of the opposite optical sensor. That is, the sensor senses the background area when there is no product being sensed. A glass or other transparent enclosure is required to shield the sensor from dust and chaff. By painting an area of such a shield avoids the use of a separate background material as used in the prior art is avoided. Also the glare on the background that occurs when there is a glass with a separate background located therebehind or in front thereof to catch reflections will be prevented.. When frosted areas are employed, rather than painted areas, for the background areas, an image projector (not shown in Fig. 1) is also required. A comparably positioned image projector would be required for co-operative imaging with respect to each of the respective sensors. As with one or more painted areas, one or more frosted areas on the shielding glass or other materials makes one element do the work of two elements in the prior art and does that work better by avoiding glare distortions.

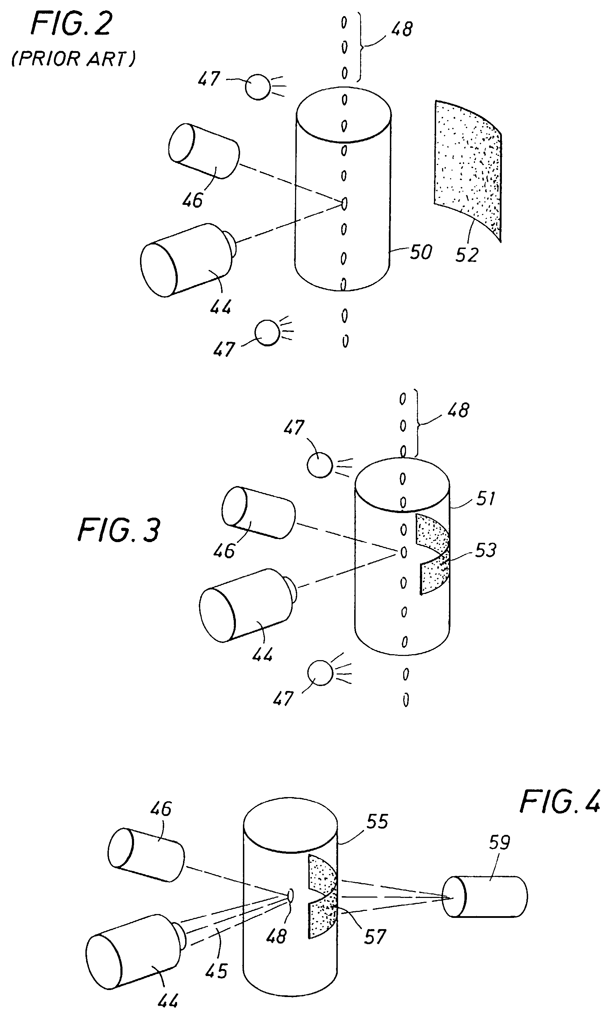

Now referring to Fig. 2, a prior art arrangement of component parts of a single light source 44 and detector 46 of an optical viewing station utilising a central cylinder at the viewing station is depicted in schematic form. Generally, illumination of the viewing area is provided by fights 47. The product stream of products 48 pass through the centre of the optical viewing station by gravity feed. The centre opening may have, but does not have to have, a clear tubular shielding medium 50, through which the product stream passes. A background 52, painted or imaged, is positioned on the opposite side of the product stream from detector 46 so that the products are framed during the instants of detection against the background. The purpose of the background and the importance of the background maintaining its colour or hue during a prolonged period of flow of the product stream have been discussed above. The shielding medium, which is typically transparent glass or plastic, helps in keeping dust contamination from rapidly building up on the background.

A similar arrangement of the component parts of a single light source 44 and detector 46 of an optical viewing station in a machine according to the present invention is shown in Fig. 3. Products 48 in the product stream pass through the centre of the viewing station by passing through a mostly clear transparent tubular shielding medium 5 1. This medium is preferably either glass or plastic. An image area 53 is painted on the surface of medium 5 1. Although it could be painted on the inside, preferably it is painted on the outside. It can be any of the colours or hues previously discussed; however, for convenience, a background that is black is often used. White is another often used colour. The centre opening of tube 51 is large enough to allow the product stream to pass through without interfering with the descent of any product. Image area 53 is opposite detector 46 and functions in the same manner as background 52, only better in that it does not need cleaning as often. This is because the majority of the environmental dust or chaff exists outside of tubular medium 5 1, not inside. Even though quite a bit of dust may accumulate on the outside of tube 5 1, this does not degrade the colour or hue of the painted area that serves as background 53 to detector 46. Only the relatively little build up of dust on the inside of tube 51 causes such degradation. Moreover, the glare that is present on background 52 in Fig. 1 is largely absent in the combined glass shield and background of Fig. 3 in that there is no separate and separated background spaced from the shield.

When the background does degrade to be unacceptable or needs to be replaced because of sorting requirements, the tube is made readily accessible and removable for cleaning or replacement in an easier fashion than for most prior art backgrounds 52.

Fig. 4 demonstrates the use of a projected image instead of a painted image on a centrally positioned tubular medium. A focused beam 45 from source 44 is directed to the products in the product stream at the position of detection occurrence. In this case, tubular medium 55 includes a frosted, etched, or otherwise textured area 57 on either the inside or outside surface of tubular medium 55. The area is located opposite detector 46 in the same manner as for area 53 in Fig. 3. An image projector 59 projects a black or other image on area 57 for creating a background operably functional with respect to the previously discussed backgrounds. A frosted or etched image permits build up of dust or product chaff for an even longer period of time than for a painted medium 51 since the dust does not have the same degradation on the image area as dust does on paint.

Fig. 5 illustrates a clear cylindrical or tubular medium of the kind previously described herein suitable for surface treatment to create three background areas 61, 63 and 65. One of these background areas operates in conjunction with a sensor or detector 46 in each of three directions spaced 120' apart when observed from the top, as they receive respective reflections from a product 48 in the product stream. It will be apparent that there is no interference of light to or from the respective backgrounds. In a two-view machine, the sensors or detectors cannot be 180' apart without the backgrounds interfering, so some angle slightly varying from 180' will have to be chosen. Although the texturing by painting or frosting is shown on the outside surface of the medium, inside texturing could be done, if preferred. However, it is usually easier to texture the outside surface than the inside surface.

In an actual sorting situation, it is common to sort in at least two bands or ranges of the illumination spectrum. Sorting in two spectral bands or ranges is referred to as bichromatic sorting. Although the above discussion has referred to the background being established and maintained at a desirable colour or hue, this is not limited to a colour or hue in a single wavelength band, but includes a colour or hue which includes two wavelength bands when used in bichromatic sorting.

The cylindrical medium that has been discussed above is desirably tubular; however, advantages of the above-described invention may be are obtained from a medium that is partly tubular, or planar, as well. Any shield that is transparent to illuminations from the source to the product and from the product to the detector or receiver while presenting a background against which the products appear to the detector will be in accordance with the invention. The shield, of course, must let the product stream pass therethrough or thereby while preventing most of the dust and chaff from collecting on the inside surface of the shield to contaminate and change the background colour or hue over a short period of time. More importantly the background and shield surface are one and, therefore, distortion and glare caused by separation of a shield from its related background is eliminated and overall distortion and glare is considerably reduced when compared to a shield separated from a background.

While several embodiments have been described and illustrated, it will be understood that the invention is not limited thereto, since many modifications may be made and will become apparent to those skilled in the art. For example, the background medium has been described as cylindrical, it could be multifaceted, such as hexagonal, if desired. The use of a shield or flat transparent housing of a sensor of the sorter designed as shown in Fig. 1 as a background surface is also within the scope of the invention.

When there is no cylindrical viewing cylinder or tube and the background needs to be matched in two or three spectral wavebands, there can be a frosted area in the appropriate place inside of each of the sensor housing windows. The background is projected onto each of these areas from two or three (as the case may be) separate and independently adjustable light sources. The background is not for the sensor within the housing, but for a sensor located opposite the product stream that is aligned with the background area for sensing purposes. The concept can work with a single viewer, a two view machine, or a three-view machine or even machines that have more than two sensing views or redundant sensing views.

## Claims

1. A colour sorting machine for sorting homogeneous products in a passing product stream by colour contrast with a background in one or more spectral bands including at least one optical viewing assembly having a light source producing light in at least one spectral band to illuminate the products in the product stream, and a detector for detecting the reflected light in said spectral band or bands resulting from product reflections of the light from the light source and producing an ejector signal for each product reflection outside a predetermined criterium, and an ejector position downstream from said optical viewing assembly for removing products that cause an ejector signal, the machine incorporating a background on the other side of the passing stream from the detector to provide an acceptable base reflection amplitude for contrasting the said reflected light in said spectral band, the background including a clear window material aligned with said detector on the other side of the product stream from the detector, and a background area placed on said material.

2. A machine in accordance with Claim 1, wherein said material at least partially surrounds the passing product stream.

3. A machine in accordance with Claim 1 or 2, wherein said background area on said material is paint.

4. A machine in accordance with Claim 3, wherein said background area is paint on the outside surface of said material.

5. A machine in accordance with Claim 1 or 2, wherein said background area on said material is a projected image.

6. A machine in accordance with claim 4, wherein said background area of said material is textured prior to receiving said projected image.

7. A machine in accordance with Claim 5, wherein said background area is textured by being frosted.

8. A machine in accordance with any one of the preceding Claims, wherein said material is in the shape of a tube through which the passing product stream flows.

9. A machine according to any one of the preceding Claims wherein there are three optical viewing assemblies.

10. A method of producing a background for a colour sorting machine that sorts homogeneous products in a passing product stream by colour contrast with a background in one or more spectral bands, the sorting machine including at least one optical viewing assembly having a light source for producing light in at least one spectral band to illuminate the products in a product stream, and a detector to detecting the reflected light in said spectral band or bands resulting from product reflections of the light from the light source and producing an ejector signal for each product reflection outside a predetermined criteria, and an ejector position downstream from said optical viewing assembly for removing products that cause an ejector signal, said method comprising at least partially surrounding the passing product stream with a clear material aligned with said detector, and creating a background area on said material on the other side of the passing product stream from the detector.

11. A method according to Claim 10, wherein the machine includes three viewing assemblies.

12. A method according to Claim 10 or 11 where the background area is created by painting.

13. A method according to Claim 10 or 11 where the background area is created by texturing the material by frosting and projecting an image onto the area.
